# EUROPEAN PATENT SPECIFICATION

(11) **EP 4 334 233 B1**
(45) Date of publication and mention of the grant of the patent: **09.12.2026**
(21) Application number: 22728415.5
(22) Date of filing: 09.05.2022
(51) Int. Cl.: B66C 23/20

(54) **SELF-HOISTING CRANE AND METHOD OF MOUNTING AND OPERATING SUCH CRANE**
SELBSTAUFRICHTENDER KRAN UND VERFAHREN ZUR MONTAGE UND ZUM BETRIEB SOLCH EINES KRANS
GRUE AUTO-ÉLÉVATRICE ET PROCÉDÉ DE MONTAGE ET DE FONCTIONNEMENT D'UNE TELLE GRUE

(30) Priority: 07.05.2021 DK PA202170216
(43) Date of publication of application: 13.03.2024
(73) Proprietor: Liftra IP ApS, 9200 Aalborg SV (DK)
(72) Inventor: HEDEGAARD, Simon, 9200 Aalborg SV (DK)
(74) Representative: Münzer, Marc Eric
(86) International application number: PCT/EP2022/062425
(87) International publication number: WO 2022/234140

(56) References cited:
- WO-A1-2020/221716
- SE-B- 417 947

## Description

The present invention relates to a self-hoisting crane adapted to be mounted on a nacelle or on a tower of a wind turbine, wherein the self-hoisting crane includes a pedestal, a boom arm, a hook block and at least one cable adapted to lift or lower the hook block in relation to the boom arm for operation of the self-hoisting crane in its mounted position on the nacelle or on the tower, wherein the at least one cable is adapted to extend from the hook block, out through the pedestal, from the nacelle or from the tower and to a cable winch arranged at the ground, wherein the self-hoisting crane is adapted to be hoisted from the ground to the nacelle or to the tower by operation of the cable winch arranged at the ground, and wherein the self-hoisting crane is adapted to be operated in its mounted position on the nacelle or on the tower by operation of the cable winch arranged at the ground.

WO 2020221716 A1 (Liftra ApS) discloses a self-hoisting crane according to the preamble of claim 1. More in detail, said self-hoisting crane is adapted to be hoisted from a container to a nacelle by operating a cable winch in the container, cables adapted to extend from the cable winch, around an exit sheave arranged in the container, and exit the container from the exit sheave in an upward direction in order to pass around at least one roller arranged at a crane base on the nacelle and continue in a downward direction to the crane, enter through a central opening in the crane pedestal and continue to the hook block.

WO 2020201237 A2 (Liftra ApS) discloses a self-hoisting crane which is hoisted from the ground to the nacelle by operating a cable winch at ground whereby a cable extends from the crane to a roller at the nacelle and to the cable winch. A hoist block with the roller is arranged on a jib at a first hoist block position above a second hinge part of a crane base mounted on the nacelle and extended in horizontal direction from the nacelle. When a first hinge part of the crane is positioned at a corresponding second hinge part of the crane base, the cable extends in a downward direction directly from the roller of the hoist block and through a central opening in a pedestal. After mutual connection of the first and second hinge parts whereby the crane is mounted in its operational position on the crane base, the hoist block is removed from its first hoist block position. In other known embodiments, the crane base may be mounted on a tower of a wind turbine rather than on a nacelle of the wind turbine. In such case, the crane base may by means of a clamping mechanism be mounted for instance on a top part of the tower in order for the crane to used for instance during mounting of a nacelle on the tower.

When a self-hoisting crane is operated in its mounted position on a nacelle or on a tower of a wind turbine, the weight of the cables extending from the hook block and downward to the cable winch arranged at the ground may pose a challenge when the hook block has to be lowered or lifted without any external load attached. This is because the weight of the hook block and the weight of the part of the cables extending from the tip of the boom arm to the hook block may not be enough to counteract the weight of the cables extending from the hook block and downward to the cable winch arranged at the ground. The result may be that the cables run backwards or that it is not possible to lower the hook block. In order to overcome this challenge, it is known to provide ballast weights on the hook block so that it may counteract the weight of the cables extending from the hook block to the cable winch arranged at the ground. However, by using such ballast weights, the weight of the ballast weights is detracted from the load that may be lifted by the self-hoisting crane.

The problem of the weight of the cables extending from the hook block and downward to the cable winch arranged at the ground increases with increasing height of wind turbines to be serviced, which currently reaches about 200 metres. Furthermore, demands for an increased working load limit of the self-hoisting crane itself requires strengthening of the structure of the components of the crane which may typically lead to a heavier crane. However, when the self-hoisting crane, during installation, is hoisted to the top of a wind turbine, the strength of the cables which are used limits the allowed maximum weight of the self-hoisting crane including hook block and possible ballast weights. In order to compensate for a larger weight of the components of the self-hoisting crane, it may therefore be necessary to reduce the weight of the hook block and/or operate without ballast weights on the hook block. In this situation, the problem of the weight of the cables extending from the hook block to the cable winch at the ground has been even further increased. This is because the weight of the hook block and the weight of the part of the cables extending from the tip of the boom arm to the hook block may not be enough to counteract the weight of the cables extending from the hook block and downward to the cable winch arranged at the ground.

The object of the present invention is to prevent or eliminate the above-mentioned problem that the at least one cable runs backwards or that it is not possible to lower the hook block when no external load is carried by the hook block.

In view of this object, the self-hoisting crane is provided with a cable crawler having at least one motor driven traction sheave adapted to, during operation of the self-hoisting crane in its mounted position on the nacelle or on the tower, transfer a pulling force to the at least one cable through friction, and the cable crawler is shiftable between an active state in which the traction sheave may transfer a pulling force or may transfer at least a substantial pulling force to the at least one cable and a passive state in which the traction sheave may transfer no pulling force or at least substantially no pulling force to the at least one cable.

In this way, when the hook block has to be lowered or lifted without any external load attached, the motor driven traction sheave of the cable crawler may transfer a suitable pulling force to the at least one cable through friction, whereby the weight of the cables extending from the hook block and downward to the cable winch may be counteracted. Thereby, it may always be possible to lower the hook block independently of the weight of the hook block and the length of the at least one cable extending from the hook block to the cable winch. Because the cable crawler is shiftable from its active state in which the traction sheave may transfer a pulling force to the at least one cable to its passive state in which the traction sheave may transfer no pulling force to the at least one cable, the cable crawler may not interfere with the operation of the self-hoisting crane when an external load is lifted by the hook block. That means that the cable crawler may be prevented from providing an unwanted braking force to the cable during the lifting operation.

As a result of the present invention, the weight of the hook block without any external load does not need to counteract the weight of the cables extending from the hook block and downward to the cable winch at ground. Therefore, it is possible to save weight on the hook block, i.e. design a lighter hook block, and consequently an increase in the working load limit of the self-hoisting crane is possible even though the weight of the self-hoisting crane itself is thereby increased. The combined weight of the self-hoisting crane and hook block may be kept low enough that the limit of the strength of the cables used for lifting the crane is not exceeded.

In a structurally particularly advantageous embodiment, in the active state of the cable crawler, a first wrap angle represents the angle of contact between the at least one cable and the traction sheave, and, in the passive state of the cable crawler, a second wrap angle represents the angle of contact between the at least one cable and the traction sheave, and in that the first wrap angle is at least substantially greater than the second wrap angle. Thereby, due to a relatively large first wrap angle in the active state of the cable crawler, the at least one motor driven traction sheave may, during operation of the self-hoisting crane in its mounted position on the nacelle or on the tower, transfer a pulling force to the at least one cable through friction, said pulling force, together with the weight of the hook block, is large enough to counteract the weight of the cables extending from the hook block and downward to the cable winch arranged at the ground. On the other hand, due to a relatively very small second wrap angle in the passive state of the cable crawler, the at least one motor driven traction sheave may, during operation of the self-hoisting crane in its mounted position on the nacelle or on the tower, transfer only a relatively very small or almost negligible pulling force to the at least one cable through friction, so that the cable crawler may practically be prevented from providing any substantial unwanted braking force to the cable during the lifting operation.

In a structurally particularly advantageous embodiment, the at least one cable, in succession, contacts a first support sheave, the motor driven traction sheave and a second support sheave, in that, seen in a transverse direction of the at least one cable, the motor driven traction sheave runs on a first traction side of the at least one cable and the first and second support sheaves run on a second side of the at least one cable, and in that the motor driven traction sheave is relatively movable in relation to at least one of the first and second support sheaves in the transverse direction of the at least one cable between an active position, in which the cable crawler is in its active state, and a passive position, in which the cable crawler is in its passive state. The first and second support sheaves may be fixed rotatably on a frame, such as for instance the boom arm of the self-hoisting crane, or such as the nacelle or the tower of a wind turbine on which the self-hoisting crane is mounted, and the motor driven traction sheave may be arranged displaceably in relation to said frame. Alternatively, the motor driven traction sheave may be fixed rotatably on such a frame, and the first and/or second support sheave may be arranged displaceably in relation to said frame. In any case, a relative displacement, seen in a transverse direction of the at least one cable, between the motor driven traction sheave and the first and/or second support sheave, may change said wrap angle between a relatively large first wrap angle in the active state of the cable crawler and a relatively very small second wrap angle in the passive state of the cable crawler, whereby the above-mentioned features may be achieved.

In an embodiment, the motor driven traction sheave is spring-biased relatively to the at least one of the first and second support sheaves from the passive position of the traction sheave to the active position of the traction sheave. Thereby, the cable crawler may automatically shift between its active state and its passive state depending on whether the hook block is carrying an external load or not. When the hook block is carrying an external load, the at least one cable may tend to follow an at least relatively straight path and thereby displace the motor driven traction sheave relatively to the at least one of the first and second support sheaves, against the spring-bias, so that the traction sheave may reach its passive position. Thereby, the motor driven traction sheave may be prevented from providing any substantial unwanted braking force to the at least one cable during the lifting operation. On the other hand, when the hook block is not carrying any external load, the at least one cable may follow the path formed by the motor driven traction sheave and the at least one of the first and second support sheaves, in the active position of the traction sheave, without pressing the motor driven traction sheave relatively to the at least one of the first and second support sheaves, against the spring-bias. Thereby, the traction sheave may remain in its active position and may therefore transfer a suitable pulling force to the at least one cable through friction, whereby the weight of the cables extending from the hook block and downward to the cable winch may be counteracted when operating the self-hoisting crane without external load. Due to this automatic shift between the active state and the passive state of the cable crawler, the operator of the self-hoisting crane may not need to control the cable crawler manually.

In an embodiment, in the active position of the motor driven traction sheave, the traction sheave presses the at least one cable against at least one pressure wheel. Thereby, by pressing the motor driven traction sheave against the at least one pressure wheel with the at least one cable in between, the motor driven traction sheave of the cable crawler may transfer an even larger pulling force to the at least one cable through friction.

Preferably, the at least one pressure wheel is a metal wheel.

In an embodiment, the motor driven traction sheave has a diameter of at least 3 times, preferably at least 4 times, the diameter of the at least one pressure wheel. Thereby, by providing a relatively small pressure wheel pressing the at least one cable against a relatively larger motor driven traction sheave, the friction between the motor driven traction sheave and the at least one cable may be increased relatively more over a relatively small part of the wrap angle of the motor driven traction sheave. Consequently, the motor driven traction sheave of the cable crawler may transfer an even larger pulling force to the at least one cable through friction.

In an embodiment, in the active position of the motor driven traction sheave, the traction sheave is guided to be relatively displaceable in relation to the at least one pressure wheel in a direction forming an angle of between 30 and 85 degrees, preferably between 45 and 75 degrees, with an axis through a rotation axis of the traction sheave and a rotation axis of the at least one pressure wheel. Thereby, a wedge-like effect may be obtained when the motor driven traction sheave is pressed against the at least one pressure wheel with the at least one cable in between. This may be achieved in that the contact points of the traction sheave and the at least one pressure wheel, respectively, are not pressed against each other in the radial directions of the traction sheave and the at least one pressure wheel, respectively, but rather in respective oblique directions in relation to said radial directions. The wedge-like effect may ensure that the motor driven traction sheave is pressed even harder against the at least one pressure wheel with the at least one cable in between, thereby resulting in that the motor driven traction sheave of the cable crawler may transfer an even larger pulling force to the at least one cable through friction.

In an embodiment, a motor drive for the at least one motor driven traction sheave is switchable between an active mode in which an at least substantial rotational moment may be applied to the traction sheave and a free-wheeling mode in which no rotational moment or at least no significant rotational moment may be applied to the traction sheave, and the cable crawler is adapted to switch the motor drive to its free-wheeling mode when the cable crawler is shifted from its active state to its passive state. Switching between the active mode and the passive mode may be performed by controlling software or by means of a mechanical clutch. Thereby, it may be ensured that in the active mode of the motor drive, the cable crawler may transfer sufficient pulling force to the at least one cable, whereas in the passive mode of the motor drive, the cable crawler may practically not interfere with the operation of the self-hoisting crane when an external load is lifted by the hook block.

In an embodiment, motor drive for the at least one motor driven traction sheave is provided with a speed control adapted to, at least in the active mode of the motor drive, limit the travel speed of the at least one cable at the position of the self-hoisting crane relatively to the travel speed of the at least one cable at the position of the cable winch arranged at the ground. Thereby, it may ensured that the travel speed of the at least one cable does not differ substantially between the position of the self-hoisting crane and the position of the cable winch. This may ensure that the at least one cable is generally suitably stretched. The speed control of the motor drive may receive information of the travel speed of the at least one cable at the position of the cable winch by wireless communication, such as WIFI.

In a structurally particularly advantageous embodiment, the cable crawler includes a motor housing provided with a motor drive and the at least one motor driven traction sheave, and the motor housing is swingable about a rotation point in relation to a frame carrying the first and second support sheaves between an active position in which the cable crawler is in its active state and a passive position in which the cable crawler is in its passive state.

In an embodiment, a spring pack is arranged between the motor housing and the frame so that, in the active position of the motor housing, the spring pack acts on the motor housing with a first moment arm in relation to the rotation point of the motor housing, and, in the passive position of the motor housing, the spring pack acts on the motor housing with a second moment arm in relation to the rotation point of the motor housing, and the first moment arm is greater than the second moment arm. Thereby it may be ensured that, in the active state of the cable crawler, the motor driven traction sheave is biased by means of a suitable relatively large force against the at least one of the first and second support sheaves and possibly against the at least one pressure wheel with the at least one cable in between, in order to provide a suitable pulling force to the at least one cable. On the other hand it may be ensured that, in the passive state of the cable crawler, the motor driven traction sheave is biased by means of a suitable relatively low force, against the at least one cable so that the cable crawler may not interfere with the operation of the self-hoisting crane when an external load is lifted by the hook block.

In a structurally particularly advantageous embodiment, the cable crawler is arranged in the self-hoisting crane, preferably in the boom arm, and preferably at an end of the boom arm next to the pedestal. Thereby, the cable crawler may be provided as an integral part of the self-hoisting crane so that no separate mounting of the cable crawler, for instance on the wind turbine, is necessary. The operation of the cable crawler may be automatic and does not need to be taken into account by the operator.

The present invention further relates to a method of mounting and subsequently operating a self-hoisting crane on a nacelle or on a tower of a wind turbine, whereby the self-hoisting crane includes a pedestal, a boom arm, a hook block and at least one cable adapted to lift or lower the hook block in relation to the boom arm for operation of the self-hoisting crane in its mounted position on the nacelle or on the tower, whereby the at least one cable extends from the hook block, out through the pedestal, from the nacelle or from the tower and to a cable winch arranged at the ground, whereby the self-hoisting crane is hoisted from the ground to the nacelle or to the tower by operating the cable winch arranged at the ground, and whereby the self-hoisting crane is operated in its mounted position on the nacelle or on the tower by operating the cable winch arranged at the ground.

The method according to the present invention is characterised in that the self-hoisting crane is provided with a cable crawler having at least one motor driven traction sheave adapted to transfer a pulling force to the at least one cable through friction, in that the cable crawler is shiftable between an active state in which the traction sheave transfers a pulling force or an at least substantial pulling force to the at least one cable and a passive state in which the traction sheave transfers no or at least substantially no pulling force to the at least one cable, in that, when the self-hoisting crane is operated in its mounted position on the nacelle or on the tower without any or at least substantially without any external load attached to the hook block, the cable crawler is operated in its active state, and in that, when the self-hoisting crane is operated in its mounted position on the nacelle or on the tower with an at least substantial external load attached to the hook block, the cable crawler is operated in its passive state. Thereby, the above-described advantages may be obtained.

According to the present invention, a number of embodiments of the above-mentioned method of mounting and subsequently operating a self-hoisting crane on a nacelle or on a tower of a wind turbine correspond to the above-mentioned embodiments of the self-hoisting crane according to the present invention.

The invention will now be explained in more detail below by means of examples of embodiments with reference to the very schematic drawing, in which
Fig. 1 is a side view of a container for use with a self-hoisting crane according to the invention;
Fig. 2 is a top view of the container of Fig. 1;
Fig. 3 is a perspective view of a wind turbine during lifting of a self-hoisting crane according to the invention to the nacelle by means of a cable winch in a container as illustrated in Figs. 1 and 2;
Fig. 4 is a side view of a self-hoisting crane according to the invention mounted on the nacelle of the wind turbine of Fig. 3;
Fig. 5 is a perspective view of the self-hoisting crane of Fig. 4, whereby the wind turbine is not illustrated;
Fig. 6 is a side view showing a detail on a larger scale of the self-hoisting crane of Fig. 5, whereby the cable crawler is in its active state;
Fig. 7 is a side view corresponding to that of Fig. 6, whereby a motor driven traction sheave of the cable crawler has been slightly moved away from its active position;
Fig. 8 is a side view corresponding to that of Fig. 6, whereby the cable crawler is in its passive state; and
Fig. 9 is an exploded perspective view of part of a boom arm and the cable crawler of the self-hoisting crane of Fig. 5.

In the following, generally, similar elements of different embodiments have been designated by the same reference numerals.

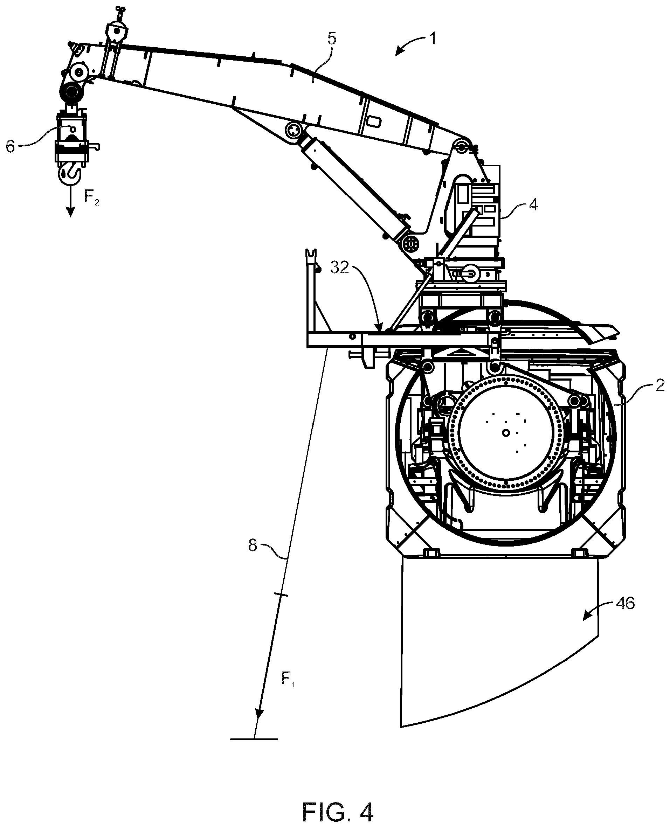

Fig. 4 shows an embodiment of a self-hoisting crane 1 according to the present invention, mounted on a nacelle 2 of a wind turbine 3. The self-hoisting crane includes a pedestal 4, a boom arm 5, a hook block 6 and a first and a second cable 7, 8 or wire rope adapted to lift or lower the hook block 6 in relation to the boom arm 5 for operation of the self-hoisting crane in its mounted position on the nacelle 2. In a well-known manner, the pedestal 4 is mounted in a mounting position on a crane base 32 arranged on the nacelle 2. Although in the illustrated embodiments, the crane base 32 is arranged on the nacelle 2 of the wind turbine 3, in other not shown embodiments, the crane base 32 may be mounted on the tower 46 of the wind turbine 3 rather than on the nacelle 2 of the wind turbine. In such case, the crane base 32 may by means of a not shown clamping mechanism be mounted for instance on a top part of the tower 46 in order for the self-hoisting crane 1 to be used for instance during mounting of the nacelle 2 on the tower 46.

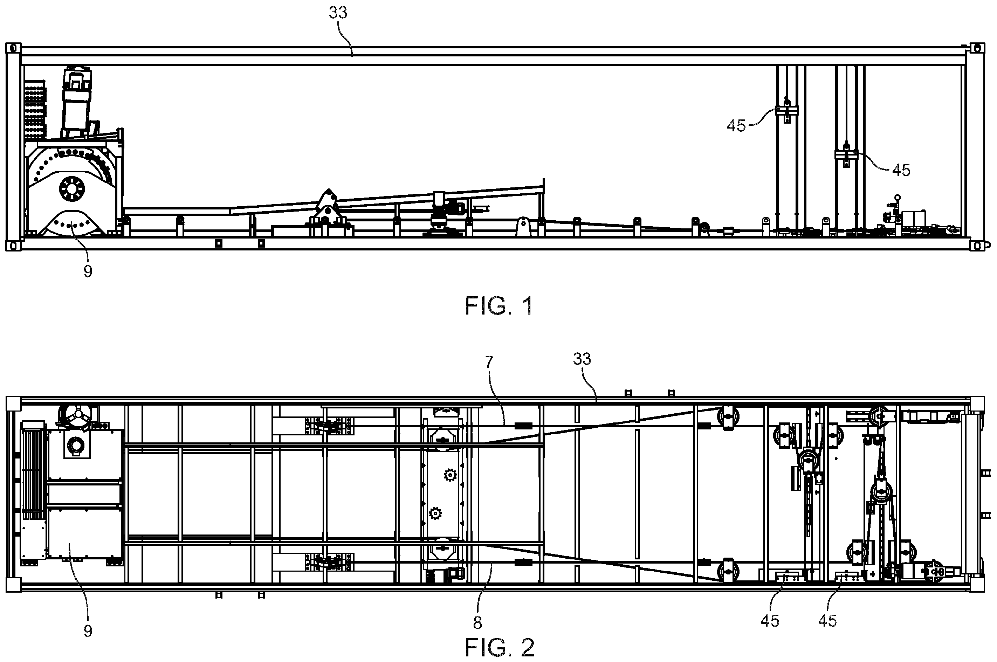

The first and second cables 7, 8 extend from the hook block 6, out through the pedestal 4, from the nacelle 2 and to a cable winch 9 arranged at the ground 10. The cable winch 9 is arranged in a container 33 for transporting the self-hoisting crane 1, as seen in Figs. 1 and 2.

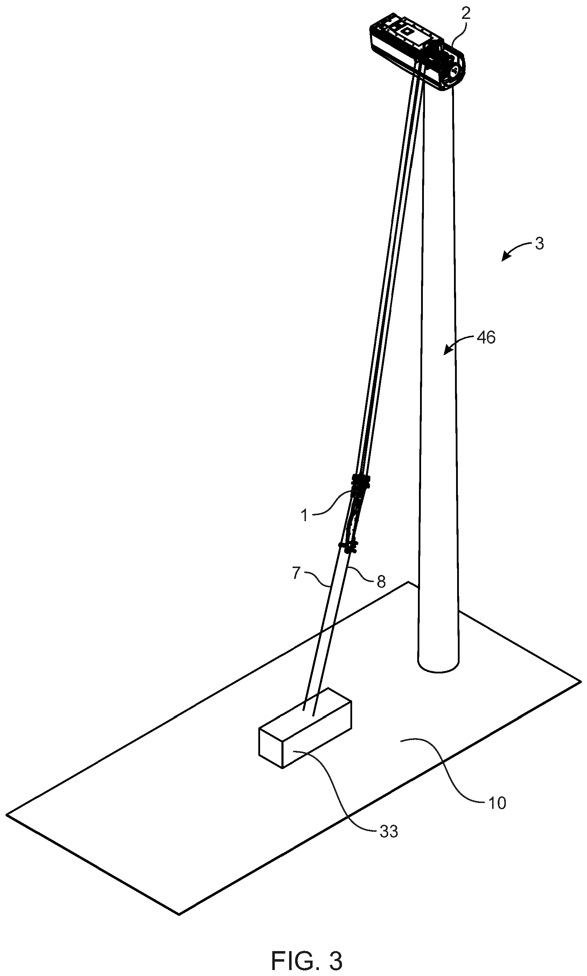

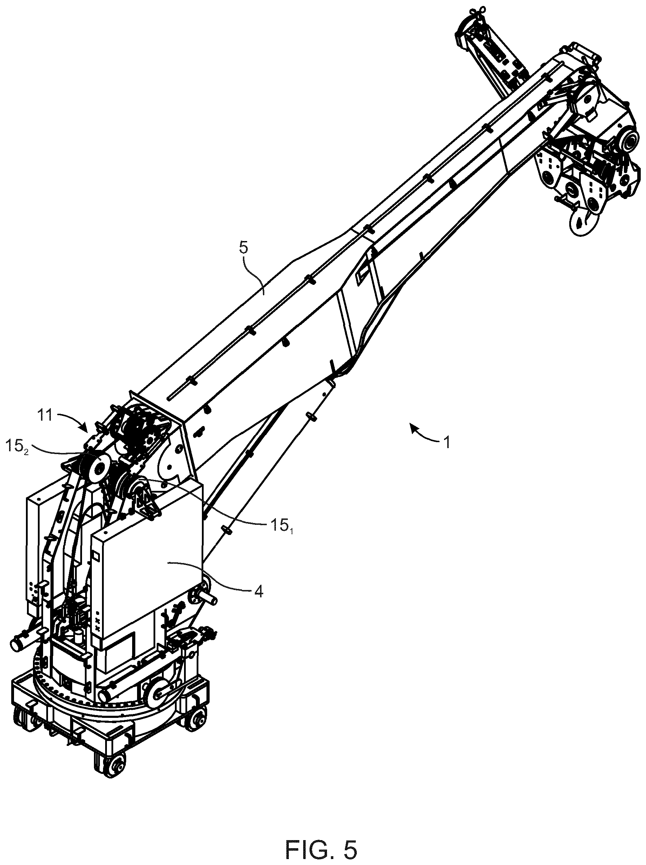

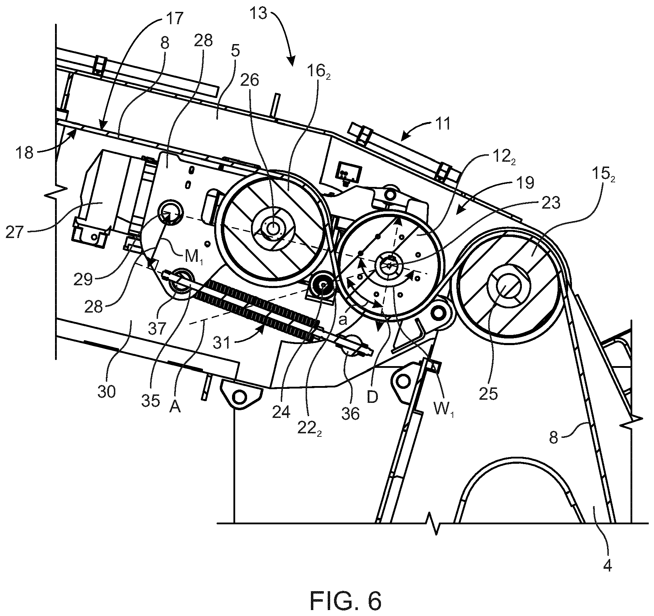

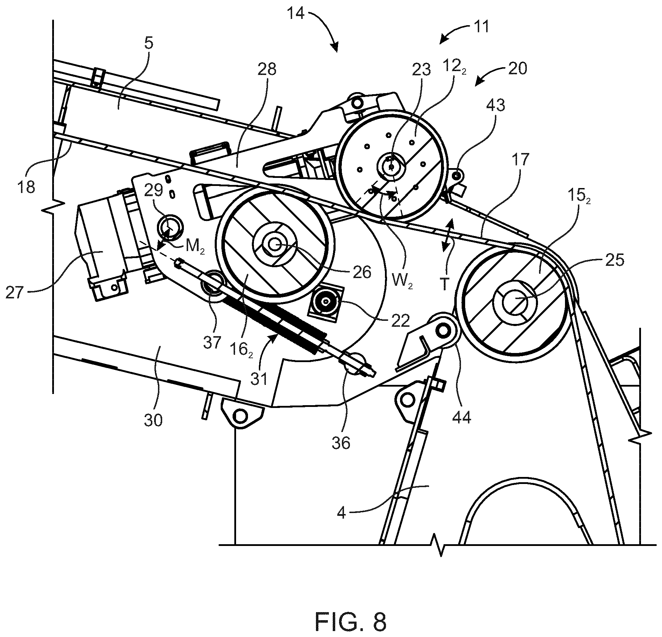

As seen in Fig. 3, the self-hoisting crane 1 is adapted to be hoisted from the ground 10 to the nacelle 2 or to preferably a top part of the tower 46 by operation of the cable winch 9 in the container 33 arranged at the ground. Furthermore, as illustrated in Fig. 4, and the self-hoisting crane 1 is adapted to be operated in its mounted position on the nacelle 2 or on the tower 46 by operation of the cable winch 9 arranged at the ground 10. In the embodiment illustrated in Figs. 5 to 9, the self-hoisting crane 1 according to the invention is provided with a cable crawler 11 having a first and a second motor driven traction sheave 12₁, 12₂ adapted to, during operation of the self-hoisting crane 1 in its mounted position on the nacelle 2 or on the tower 46, transfer a pulling force F_{P} to the respective first and second cables 7, 8 through friction. The cable crawler 11 is shiftable between an active state 13 illustrated in Fig. 6 in which the first and second traction sheaves 12₁, 12₂ may transfer a pulling force or may transfer at least a substantial pulling force to the respective first and second cables 7, 8 and a passive state 14 illustrated in Fig. 8 in which the first and second traction sheaves 12₁, 12₂ may transfer no pulling force or at least substantially no pulling force to the respective first and second cables 7, 8 through friction.

In the illustrated embodiment, in the active state 13 of the cable crawler 11, as illustrated in Fig. 6, a first wrap angle W₁ represents the angle of contact between each cable 7, 8 and the respective traction sheave 12₁, 12₂. Furthermore, in the passive state 14 of the cable crawler 11, as illustrated in Fig. 8, a second wrap W₂ angle represents the angle of contact between each cable 7, 8 and the respective traction sheave 12₁, 12₂. As seen, the first wrap angle W₁ is substantially greater than the second wrap angle W₂. The first wrap angle W₁ may for instance be at least 1.5 times and preferably at least 2 times greater than the second wrap angle W₂.

As illustrated in Fig. 4, due to the relatively larger first wrap angle W₁ in the active state 13 of the cable crawler 11, the first and second motor driven traction sheaves 12₁, 12₂ may transfer a total pulling force F_{P} to the respective first and second cables 7, 8 through friction. Said total pulling force, together with a force F₂ corresponding to weight of the hook block 6, is large enough to counteract a force F₁ corresponding to the weight of the part of the first and second cables 7, 8 extending from hook block 6, i.e. from the top of the boom arm 5, to the cable winch 9 arranged at the ground 10. In other words: F₂ + F_{P} > F₁.

On the other hand, due to the relatively smaller second wrap W₂ angle in the passive state 14 of the cable crawler 11, the first and second motor driven traction sheaves 12₁, 12₂ may transfer only a relatively very small or almost negligible total pulling force to the respective first and second cables 7, 8 through friction. Therefore, in the passive state 14 of the cable crawler 11, the cable crawler may practically be prevented from providing any substantial unwanted braking force to the cables during the lifting operation.

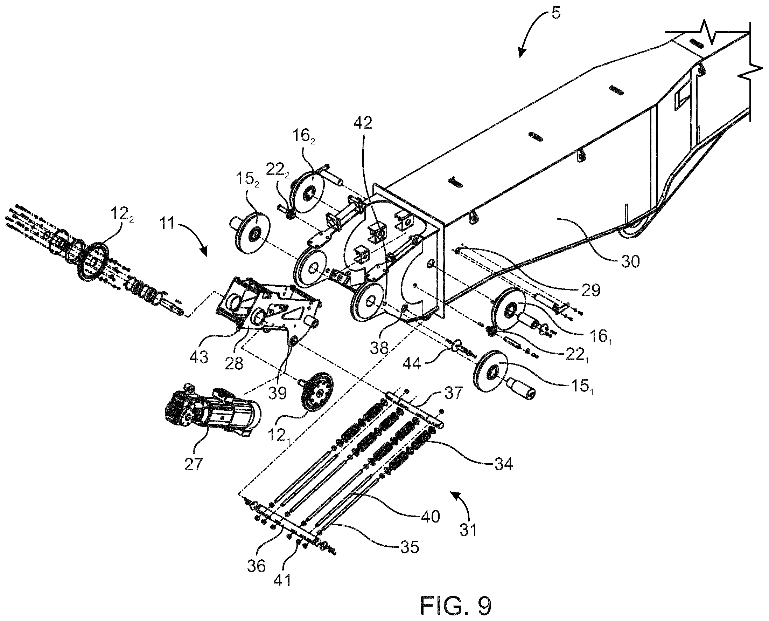

Figs. 6 to 8 illustrate a longitudinal section through the boom arm 5 of the self-hoisting crane 1 as seen in Fig. 4. As seen, the cable 8, in succession, contacts a first support sheave 15₂, the motor driven traction sheave 12₂ and a second support sheave 16₂. Seen in a transverse direction T of the cable 8, the motor driven traction sheave 12₂ runs on a first traction side 17 of the cable 8 and the first and second support sheaves 15₂, 16₂ run on a second side 18 of the cable 8. Comparing Figs. 6 and 8, it is seen that the motor driven traction sheave 12₂ is relatively movable in relation to the first and second support sheaves 15₂, 16₂ in the transverse direction T of the cable 8 between an active position 19 seen in Fig. 6, in which the cable crawler 11 is in its active state 13, and a passive position 20 seen in Fig. 8, in which the cable crawler 11 is in its passive state 14. Likewise and parallel arranged, the cable 7, in succession, contacts a first support sheave 15₁, the motor driven traction sheave 12₁ and a second support sheave 16₁. Seen in a transverse direction T of the cable 7, the motor driven traction sheave 12₁ runs on a first traction side 17 of the cable 7 and the first and second support sheaves 15₁, 16₁ run on a second side 18 of the cable 7. As understood from Fig. 9, and as it will be explained in further detail below, the first and second motor driven traction sheaves 12₁, 12₂ are driven on a common axle by a common motor drive 27. The common motor drive 27 may include a gear box and/or a brake.

As further seen in Figs. 6 to 8, the first and second support sheaves 15₁, 15₂, 16₁, 16₂ are fixed rotatably on a frame 30 in the form of the boom arm 5 of the self-hoisting crane 1. The motor driven traction sheaves 12₁, 12₂ are arranged displaceably in relation to said frame 30. Alternatively, the motor driven traction sheaves could be fixed rotatably on such frame, and the first and second support sheaves could be arranged displaceably in relation to said frame. In any case, a relative displacement, seen in the transverse direction T of the cables 7, 8, between the motor driven traction sheave and the first and second support sheaves, may change said wrap angle between a relatively large first wrap angle W₁ in the active state 13 of the cable crawler 11 and a relatively very small second wrap angle W₂ in the passive state 14 of the cable crawler.

In the illustrated embodiment, the cable crawler 11 includes a motor housing 28 provided with the motor drive 27 and the first and second motor driven traction sheaves 12₁, 12₂. The motor housing 28 is swingable about a rotation point 29 in relation to the frame 30 carrying the first and second support sheaves 15₁, 15₂, 16₁, 16₂ between an active position in which the cable crawler 11 is in its active state 13 and a passive position in which the cable crawler 11 is in its passive state 14.

Furthermore, in the illustrated embodiment, the motor driven traction sheaves 12₁, 12₂ are spring-biased relatively to the first and second support sheaves 15₁, 15₂, 16₁, 16₂ from the passive position 20 of the traction sheaves 12₁, 12₂ to the active position 19 of the traction sheaves. Thereby, the cable crawler 11 may automatically shift between its active state 13 and its passive state 14 depending on whether the hook block 6 is carrying an external load or not. Instead of being spring-biased by means of mechanical springs, the traction sheaves may also be biased by means of hydraulic means or any other suitable means, such as a gas spring. When the hook block 6 is carrying an external load, the cables 7, 8 may tend to follow an at least relatively straight path and thereby displace the motor driven traction sheaves relatively to the first and second support sheaves, against the spring-bias, so that the traction sheaves 12₁, 12₂ reach their passive position 20, as illustrated in Fig. 8. Thereby, the motor driven traction sheaves 12₁, 12₂ may be prevented from providing any substantial unwanted braking force to the cables 7, 8 during the lifting operation. On the other hand, when the hook block 6 is not carrying any external load, the cables 7, 8 may follow the path formed by the motor driven traction sheaves 12₁, 12₂ and the first and second support sheaves 15₁, 15₂, 16₁, 16₂, in the active position 19 of the traction sheaves 12₁, 12₂, as seen in Fig. 6, without pressing the motor driven traction sheaves 12₁, 12₂ relatively to the first and second support sheaves 15₁, 15₂, 16₁, 16₂, against the spring-bias. Thereby, the traction sheaves 12₁, 12₂ may remain in their active position 19 and may therefore transfer a suitable pulling force to the cables 7, 8 through friction, as discussed above. Due to this automatic shift between the active state 13 and the passive state 14 of the cable crawler 11, the operator of the self-hoisting crane 1 may not need to control the cable crawler manually.

Moreover, in the illustrated embodiment, the motor driven traction sheaves 12₁, 12₂ are spring-biased from their passive position 20 illustrated in Fig. 8 to their active position 19 illustrated in Fig. 6 by means of a spring pack 31 arranged between the motor housing 28 and the frame 30 of the boom arm 5. The spring pack 31 is loaded with a number of compression springs 34, so that, in the active position of the motor housing 28, the spring pack 31 acts on the motor housing with a first moment arm M₁ in relation to the rotation point 29 of the motor housing, as seen in Fig. 6, and, in the passive position of the motor housing 28, the spring pack 31 acts on the motor housing with a second moment arm M₂ in relation to the rotation point 29 of the motor housing 28, as seen in Fig. 8, and the first moment arm M₁ is greater than the second moment arm M₂. Thereby, in the passive state of the cable crawler 11 as seen in Fig. 8, the motor driven traction sheaves may be biased by means of a suitable relatively low force against the cables 7, 8, although the spring force of the spring pack may be larger than in the active state of the cable crawler, due to relatively more compression of the springs 34. Consequently, the cable crawler 11 may not interfere with the operation of the self-hoisting crane 1 when an external load is lifted by the hook block.

As illustrated in Fig. 9, the spring pack 31 is composed by four parallel sets each comprising two compression springs arranged in series, i.e. aligned with each other on a pin 35. By using parallel sets of compression springs, it may be possible to use relatively softer springs and thereby obtain a longer service life. Furthermore, this arrangement does not take up too much space. The pins 35 with compression springs 34 are arranged between a set of two cross-pins 36, 37 of which one 36 is mounted rotatably in a bearing 38 of the boom arm 5 and of which another 37 is mounted rotatably in a bearing 39 of the motor housing 28. The spring pack 31 is further provided with two parallel locking rods 40 arranged between the set of two cross-pins 36, 37 and parallel with and between the pins 35. By means of the locking rods 40 and corresponding locking nuts 41 threaded thereon, the spring pack 31 may be locked in the passive position of the motor housing 28 as seen in Fig. 8, during mounting of the self-hoisting crane 1 or for maintenance purposes.

In order to transfer an even larger pulling force from the motor driven traction sheaves 12₁, 12₂ to the respective cables 7, 8 through friction, in the active position 19 of the motor driven traction sheaves 12 illustrated in Fig. 6, the traction sheaves 12₁, 12₂ press the cables 7, 8 against respective pressure wheels 22₁, 22₂ arranged in bearings 42 in the boom arm 5. Preferably, the motor driven traction sheaves have a diameter of at least 3 times, preferably at least 4 times, the diameter of the pressure wheels. Consequently, the motor driven traction sheave of the cable crawler 11 may transfer an even larger pulling force to the at least one cable through friction.

As illustrated in Fig. 6, in the active position 19 of the motor driven traction sheaves 12₁, 12₂, the traction sheaves 12₁, 12₂ are guided to be relatively displaceable in relation to the pressure wheels 22₁, 22₂ in a direction D forming an angle a of between 30 and 85 degrees, preferably between 45 and 75 degrees, with an axis A through a rotation axis 23 of the traction sheaves and a rotation axis 24 of the pressure wheels 22₁, 22₂. Thereby, a wedge-like effect may be obtained when the motor driven traction sheaves are pressed against the respective pressure wheels with the respective cables in between, thereby resulting in that the motor driven traction sheaves may transfer an even larger pulling force to the cables through friction, as explained above.

The motor drive 27 for the motor driven traction sheaves 12₁, 12₂ may be switchable between an active mode in which an at least substantial rotational moment may be applied to the traction sheaves 12₁, 12₂ and a free-wheeling mode in which no rotational moment or at least no significant rotational moment may be applied to the traction sheaves 12₁, 12₂. The cable crawler 11 may be adapted to switch the motor drive 27 to its free-wheeling mode when the cable crawler 11 is shifted from its active state 13 to its passive state 14.

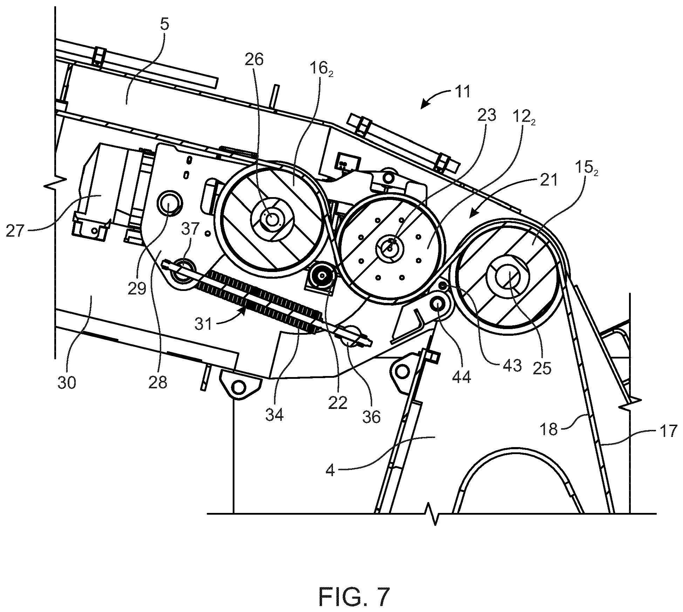

In the illustrated embodiment, switching between the active mode and the passive mode is performed by controlling software in that a signal is received from an inductive switch 43 arranged on the swingable motor housing 28, as seen for instance in Fig. 8, when the inductive switch 43 is near a metal disc 44 arranged on the boom arm 5, as it is the case in Fig. 6. Fig. 7 illustrates an intermediate position of the motor housing 28, in which the motor housing has just left its active position of Fig. 6 and the traction sheaves 12₁, 12₂ have just left their active position 19. In this intermediate position, the inductive switch 43 has already switched from the active mode to the passive mode of the motor drive 27. Thereby it may be ensured that in the active mode of the motor drive 27, the cable crawler 11 may transfer sufficient pulling force to the cables 7, 8, whereas in the passive mode of the motor drive, the cable crawler may practically not interfere with the operation of the self-hoisting crane 1 when an external load is lifted by the hook block. In the passive mode of the motor drive 27, the controlling software may simply disconnect the electric connection to an electric motor of the motor drive 27. Furthermore, in the passive mode of the motor drive 27, the controlling software may release a brake for the motor drive. Alternatively, in the passive mode of the motor drive 27, a frequency converter used to control the electric motor may just be set to "no moment". It is preferred that the electric motor is an alternating current motor having coils in both the rotor and in the stator so that it is possible to achieve a very low moment in the passive mode of the motor drive. Otherwise, in an alternative embodiment, switching between the active mode and the passive mode may be performed by a mechanical clutch or any other suitable mechanical system.

The motor drive 27 for the motor driven traction sheaves 12₁, 12₂ may be provided with a speed control adapted to, at least in the active mode of the motor drive 27, limit the travel speed of the cables 7, 8 at the position of the self-hoisting crane 1 relatively to the travel speed of the cables 7, 8 at the position of the cable winch 9 arranged at the ground 10. For instance, as an example, the travel speed of the cables 7, 8 at the position of the self-hoisting crane 1 may be controlled to be within 15 to 20 per cent of the travel speed of the cables 7, 8 at the position of the cable winch 9. Thereby, it may ensured that the travel speed of the cable does not differ substantially between the position of the self-hoisting crane and the position of the cable winch, as explained above.

The motor drive 27 for the motor driven traction sheaves 12₁, 12₂ is preferably provided with a moment control system adapted to ensure that a suitable rotational moment may be applied to the traction sheaves 12₁, 12₂ in the active mode of the motor drive 27. In order to adjust and input the desired rotational moment to the moment control system, in the mounted position of the self-hoisting crane 1 on the nacelle 2 or on the tower 46, the self-hoisting crane may simply be set to lower the hook block 6 from the top of the boom arm 5 without any external load attached to the hook block 6, whereby the hook block 6 is lowered by means of the motor drive 27 rotating the motor driven traction sheaves 12₁, 12₂. The moment control system is set to raise the rotational moment until a pair of ballast weights for the cables 7, 8, arranged in the container 33, are lifted by the cables 7, 8. When this happens, the rotational moment with which the traction sheaves 12₁, 12₂ are rotated, is large enough to outbalance the weight of the part of the cables 7, 8 extending from the nacelle 2 or from the tower 46 to the container 33. This rotational moment may subsequently be set as the desired rotational moment for said moment control system. The system of ballast weights for the cables 7, 8 is well-known in the art and is described in WO 2020221716 A1 mentioned above.

### List of reference numbers

- a: angle
- A: axis through rotation axis of traction sheave and rotation axis of pressure wheel
- D: guide direction for traction sheave
- F₁: force corresponding to weight of cables extending from hook block to cable winch
- F₂: force corresponding to weight of hook block
- F_{P}: pulling force
- M₁: first moment arm
- M₂: second moment arm
- T: transverse direction of cable
- W₁: first wrap angle
- W₂: second wrap angle
- 1: self-hoisting crane
- 2: nacelle of wind turbine
- 3: wind turbine
- 4: pedestal
- 5: boom arm
- 6: hook block
- 7, 8: cable
- 9: cable winch arranged at ground
- 10: ground
- 11: cable crawler
- 12₁, 12₂: motor driven traction sheave
- 13: active state of cable crawler
- 14: passive state of cable crawler
- 15₁, 15₂: first support sheave
- 16₁, 16₂: second support sheave
- 17: first traction side of cable
- 18: second side of cable
- 19: active position of traction sheave
- 20: passive position of traction sheave
- 21: intermediate position of traction sheave
- 22₁, 22₂: pressure wheel
- 23: rotation axis of traction sheave
- 24: rotation axis of pressure wheel
- 25: rotation axis of first support sheave
- 26: rotation axis of second support sheave
- 27: motor drive for motor driven traction sheave
- 28: motor housing of cable crawler
- 29: rotation point of housing
- 30: frame carrying first and second support sheaves
- 31: spring pack
- 32: crane base
- 33: container for self-hoisting crane
- 34: compression spring
- 35: pin for compression spring
- 36, 37: cross-pin
- 38: bearing of boom arm
- 39: bearing of motor housing
- 40: locking rod of spring pack
- 41: locking nut
- 42: bearing in boom arm
- 43: inductive switch
- 44: metal disc for inductive switch
- 45: ballast weight for cable in container
- 46: tower of wind turbine

## Claims

1. A self-hoisting crane (1) adapted to be mounted on a nacelle (2) or on a tower (46) of a wind turbine (3), wherein the self-hoisting crane includes a pedestal (4), a boom arm (5), a hook block (6), a cable winch (9) arranged at the ground (10) and at least one cable (7, 8) adapted to lift or lower the hook block (6) in relation to the boom arm (5) for operation of the self-hoisting crane in its mounted position on the nacelle (2) or on the tower (46), wherein the at least one cable (7, 8) is adapted to extend from the hook block (6), out through the pedestal (4), from the nacelle (2) or from the tower (46) and to said cable winch (9) arranged at the ground (10), wherein the self-hoisting crane (1) is adapted to be hoisted from the ground (10) to the nacelle (2) or to the tower (46) by operation of the cable winch (9) arranged at the ground, and wherein the self-hoisting crane (1) is adapted to be operated in its mounted position on the nacelle (2) or on the tower (46) by operation of the cable winch (9) arranged at the ground (10), **characterised in that** the self-hoisting crane (1) is provided with a cable crawler (11) having at least one motor driven traction sheave (12₁, 12₂) adapted to, during operation of the self-hoisting crane (1) in its mounted position on the nacelle (2) or on the tower (46), transfer a pulling force (Fp) to the at least one cable (7, 8) through friction, and **in that** the cable crawler (11) is shiftable between an active state (13) in which the traction sheave (12₁, 12₂) may transfer a pulling force or may transfer at least a substantial pulling force to the at least one cable (7, 8) and a passive state (14) in which the traction sheave (12₁, 12₂) may transfer no pulling force or at least substantially no pulling force to the at least one cable (7, 8).

2. A self-hoisting crane according to claim 1, wherein, in the active state (13) of the cable crawler (11), a first wrap angle (W₁) represents the angle of contact between the at least one cable (7, 8) and the traction sheave (12₁, 12₂), and wherein, in the passive state (14) of the cable crawler (11), a second wrap (W₂) angle represents the angle of contact between the at least one cable (7, 8) and the traction sheave (12₁, 12₂), and in that the first wrap angle (W₁) is at least substantially greater than the second wrap angle (W₂).

3. A self-hoisting crane according to claim 1 or 2, wherein the at least one cable (7, 8), in succession, contacts a first support sheave (15₁, 15₂), the motor driven traction sheave (12₁, 12₂) and a second support sheave (16₁, 16₂), in that, seen in a transverse direction (T) of the at least one cable (7, 8), the motor driven traction sheave (12₁, 12₂) runs on a first traction side (17) of the at least one cable (7, 8) and the first and second support sheaves (15₁, 15₂, 16₁, 16₂) run on a second side (18) of the at least one cable (7, 8), and in that the motor driven traction sheave (12₁, 12₂) is relatively movable in relation to at least one of the first and second support sheaves (15₁, 15₂, 16₁, 16₂) in the transverse direction (T) of the at least one cable (7, 8) between an active position (19), in which the cable crawler (11) is in its active state (13), and a passive position (20), in which the cable crawler (11) is in its passive state (14).

4. A self-hoisting crane according to claim 3, wherein the motor driven traction sheave (12₁, 12₂) is spring-biased relatively to the at least one of the first and second support sheaves (15₁, 15₂, 16₁, 16₂) from the passive position (20) of the traction sheave (12₁, 12₂) to the active position (19) of the traction sheave (12₁, 12₂).

5. A self-hoisting crane according to claim 3 or 4, wherein, in the active position (19) of the motor driven traction sheave (12₁, 12₂), the traction sheave presses the at least one cable (7, 8) against at least one pressure wheel (22₁, 22₂).

6. A self-hoisting crane according to claim 5, wherein the motor driven traction sheave (12₁, 12₂) has a diameter of at least 3 times, preferably at least 4 times, the diameter of the at least one pressure wheel (22₁, 22₂).

7. A self-hoisting crane according to claim 5 or 6, wherein, in the active position (19) of the motor driven traction sheave (12₁, 12₂), the traction sheave (12₁, 12₂) is guided to be relatively displaceable in relation to the at least one pressure wheel (22₁, 22₂) in a direction (D) forming an angle (a) of between 30 and 85 degrees, preferably between 45 and 75 degrees, with an axis (A) through a rotation axis (23) of the traction sheave and a rotation axis (24) of the at least one pressure wheel (22₁, 22₂).

8. A self-hoisting crane according to any one of the preceding claims, wherein a motor drive (27) for the at least one motor driven traction sheave (12₁, 12₂) is switchable between an active mode in which an at least substantial rotational moment may be applied to the traction sheave (12₁, 12₂) and a free-wheeling mode in which no rotational moment or at least no significant rotational moment may be applied to the traction sheave (12₁, 12₂), and wherein the cable crawler (11) is adapted to switch the motor drive (27) to its free-wheeling mode when the cable crawler (11) is shifted from its active state (13) to its passive state (14).

9. A self-hoisting crane according to claim 8, wherein motor drive (27) for the at least one motor driven traction sheave (12₁, 12₂) is provided with a speed control adapted to, at least in the active mode of the motor drive (27), limit the travel speed of the at least one cable (7, 8) at the position of the self-hoisting crane (1) relatively to the travel speed of the at least one cable (7, 8) at the position of the cable winch (9) arranged at the ground (10).

10. A self-hoisting crane according to any one of the claims 3 to 7, wherein the cable crawler (11) includes a motor housing (28) provided with a motor drive (27) and the at least one motor driven traction sheave (12₁, 12₂), and wherein the motor housing (28) is swingable about a rotation point (29) in relation to a frame (30) carrying the first and second support sheaves (15₁, 15₂, 16₁, 16₂) between an active position in which the cable crawler (11) is in its active state (13) and a passive position in which the cable crawler (11) is in its passive state (14).

11. A self-hoisting crane according to claim 10, wherein a spring pack (31) is arranged between the motor housing (28) and the frame (30) so that, in the active position of the motor housing (28), the spring pack (31) acts on the motor housing with a first moment arm (M₁) in relation to the rotation point (29) of the motor housing, and, in the passive position of the motor housing (28), the spring pack (31) acts on the motor housing with a second moment arm (M₂) in relation to the rotation point (29) of the motor housing (28), and wherein the first moment arm (M₁) is greater than the second moment arm (M₂).

12. A self-hoisting crane according to any one of the preceding claims, wherein the cable crawler (11) is arranged in the self-hoisting crane (1), preferably in the boom arm (5), and preferably at an end of the boom arm next to the pedestal (4).

13. A method of mounting and subsequently operating a self-hoisting crane (1) on a nacelle (2) or on a tower (46) of a wind turbine (3), whereby the self-hoisting crane includes a pedestal (4), a boom arm (5), a hook block (6), a cable winch (9) arranged at the ground (10) and at least one cable (7, 8) adapted to lift or lower the hook block (6) in relation to the boom arm (5) for operation of the self-hoisting crane (1) in its mounted position on the nacelle (2) or on the tower (46), whereby the at least one cable (7, 8) extends from the hook block (6), out through the pedestal (4), from the nacelle (2) or from the tower (46) and to a cable winch (9) arranged at the ground (10), whereby the self-hoisting crane (1) is hoisted from the ground (10) to the nacelle (2) or to the tower (46) by operating the cable winch (9) arranged at the ground (10), and whereby the self-hoisting crane (1) is operated in its mounted position on the nacelle (2) or on the tower (46) by operating the cable winch (9) arranged at the ground (10), **characterised in that** the self-hoisting crane (1) is provided with a cable crawler (11) having at least one motor driven traction sheave (12₁, 12₂) adapted to transfer a pulling force (F_{P}) to the at least one cable (7, 8) through friction, **in that** the cable crawler (11) is shiftable between an active state (13) in which the traction sheave (12₁, 12₂) transfers a pulling force or an at least substantial pulling force to the at least one cable (7, 8) and a passive state (14) in which the traction sheave (12₁, 12₂) transfers no or at least substantially no pulling force to the at least one cable (7, 8), **in that**, when the self-hoisting crane (1) is operated in its mounted position on the nacelle (2) or on the tower (46) without any or at least substantially without any external load attached to the hook block (6), the cable crawler (11) is operated in its active state (13), and **in that**, when the self-hoisting crane (1) is operated in its mounted position on the nacelle (2) or on the tower (46) with an at least substantial external load attached to the hook block (6), the cable crawler (11) is operated in its passive state (14).

## Patentansprüche

1. Selbsthebender Kran (1), der dazu ausgelegt ist, auf einer Gondel (2) oder auf einem Turm (46) einer Windturbine (3) montiert zu werden, wobei der selbsthebende Kran einen Sockel (4), einen Auslegerarm (5), eine Hakenflasche (6), eine am Boden (10) angeordnete Seilwinde (9) und mindestens ein Seil (7, 8) beinhaltet, das dazu ausgelegt ist, die Hakenflasche (6) in Bezug auf dem Auslegerarm (5) zum Betrieb des selbsthebenden Krans in seiner auf der Gondel (2) oder auf dem Turm (46) montierten Position anzuheben oder abzusenken, wobei das mindestens eine Seil (7, 8) dazu ausgelegt ist, sich von der Hakenflasche (6) nach außen durch den Sockel (4), von der Gondel (2) oder von dem Turm (46) und zu der am Boden (10) angeordneten Seilwinde (9) zu erstrecken, wobei der selbsthebende Kran (1) dazu ausgelegt ist, vom Boden (10) zu der Gondel (2) oder zu dem Turm (46) durch Betrieb der am Boden angeordneten Seilwinde (9) gehoben zu werden und wobei der selbsthebende Kran (1) dazu ausgelegt ist, in seiner auf der Gondel (2) oder auf dem Turm (46) montierten Position durch Betrieb der am Boden (10) angeordneten Seilwinde (9) betrieben zu werden, **gekennzeichnet dadurch, dass** der selbsthebende Kran (1) mit einer Seilraupe (11) versehen ist, die mindestens eine motorangetriebene Traktionsscheibe (12₁, 12₂) aufweist, die dazu ausgelegt ist, während eines Betriebs des selbsthebenden Krans (1) in seiner auf der Gondel (2) oder auf dem Turm (46) montierten Position eine Zugkraft (Fₚ) durch Reibung auf das mindestens eine Seil (7, 8) zu übertragen, und dadurch dass, die Seilraupe (11) zwischen einem aktiven Zustand (13), in dem die Traktionsscheibe (12₁, 12₂) auf das mindestens eine Seil (7, 8) eine Zugkraft übertragen kann oder mindestens eine wesentliche Zugkraft übertragen kann, und einem passiven Zustand (14), in dem die Traktionsscheibe (12₁, 12₂) auf das mindestens eine Seil (7, 8) keine Zugkraft oder mindestens im Wesentlichen keine Zugkraft übertragen kann, versetzbar ist.

2. Selbsthebender Kran nach Anspruch 1, wobei, in dem aktiven Zustand (13) der Seilraupe (11), ein erster Wickelwinkel (W₁) den Kontaktwinkel zwischen dem mindestens einen Seil (7, 8) und der Traktionsscheibe (12₁, 12₂) darstellt, und wobei, in dem passiven Zustand (14) der Seilraupe (11), ein zweiter Wickelwinkel (W₂) den Kontaktwinkel zwischen dem mindestens einen Seil (7, 8) und der Traktionsscheibe (12₁, 12₂) darstellt, und dadurch, dass der erste Wickelwinkel (W₁) mindestens im Wesentlichen größer als der zweite Wickelwinkel (W₂) ist.

3. Selbsthebender Kran nach Anspruch 1 oder 2, wobei das mindestens eine Seil (7, 8) nacheinander eine erste Stützscheibe (15₁, 15₂), die motorangetriebene Traktionsscheibe (12₁, 12₂) und eine zweite Stützscheibe (16₁, 16₂) kontaktiert, dadurch dass, gesehen in einer Querrichtung (T) des mindestens einen Seils (7, 8), die motorangetriebene Traktionsscheibe (12₁, 12₂) auf einer ersten Traktionsseite (17) des mindestens einen Seils (7, 8) läuft und die erste und die zweite Stützscheibe (15₁, 15₂, 16₁, 16₂) auf einer zweiten Seite (18) des mindestens einen Seils (7, 8) laufen, und dadurch, dass die motorangetriebene Traktionsscheibe (12₁, 12₂) in Bezug auf mindestens eine von der ersten und der zweiten Stützscheibe (15₁, 15₂, 16₁, 16₂) in der Querrichtung (T) des mindestens einen Seils (7, 8) zwischen einer aktiven Position (19), in der die Seilraupe (11) in ihrem aktiven Zustand (13) ist, und einer passiven Position (20), in der die Seilraupe (11) in ihrem passiven Zustand (14) ist, relativ beweglich ist.

4. Selbsthebender Kran nach Anspruch 3, wobei die motorangetriebene Traktionsscheibe (12₁, 12₂) relativ zu der mindestens einen von der ersten und der zweiten Stützscheibe (15₁, 15₂, 16₁, 16₂) von der passiven Position (20) der Traktionsscheibe (12₁, 12₂) in die aktive Position (19) der Traktionsscheibe (12₁, 12₂) federvorgespannt ist.

5. Selbsthebender Kran nach Anspruch 3 oder 4, wobei, in der aktiven Position (19) der motorangetriebenen Traktionsscheibe (12₁, 12₂), die Traktionsscheibe das mindestens eine Seil (7, 8) gegen mindestens ein Druckrad (22₁, 22₂) drückt.

6. Selbsthebender Kran nach Anspruch 5, wobei die motorangetriebene Traktionsscheibe (12₁, 12₂) einen Durchmesser von mindestens dem 3-fachen, bevorzugt dem 4-fachen des Durchmessers des mindestens einen Druckrads (22₁, 22₂) aufweist.

7. Selbsthebender Kran nach Anspruch 5 oder 6, wobei, in der aktiven Position (19) der motorangetriebenen Traktionsscheibe (12₁, 12₂), die Traktionsscheibe (12₁, 12₂) so geführt wird, dass sie in Bezug auf das mindestens eine Druckrad (22₁, 22₂) in eine Richtung (D) relativ verlagerbar ist, die einen Winkel (a) von zwischen 30 und 85 Grad, bevorzugt zwischen 45 und 75 Grad mit einer Achse (A) durch eine Rotationsachse (23) der Traktionsscheibe und eine Rotationsachse (24) des mindestens einen Druckrads (22₁, 22₂) ausbildet.

8. Selbsthebender Kran nach einem der vorhergehenden Ansprüche, wobei ein Motorantrieb (27) für die mindestens eine motorangetriebene Traktionsscheibe (12₁, 12₂) zwischen einem aktiven Modus, in dem ein mindestens wesentliches Rotationsmoment auf die Traktionsscheibe (12₁, 12₂) angewendet werden kann, und einem Freilaufmodus, in dem kein Rotationsmoment oder mindestens kein signifikantes Rotationsmoment auf die Traktionsscheibe (12₁, 12₂) angewendet werden kann, verstellbar ist, und wobei die Seilraupe (11) dazu ausgelegt ist, den Motorantrieb (27) in seinen Freilaufmodus zu verstellen, wenn die Seilraupe (11) aus ihrem aktiven Zustand (13) in ihren passiven Zustand (14) versetzt wird.

9. Selbsthebender Kran nach Anspruch 8, wobei ein Motorantrieb (27) für die mindestens eine motorangetriebene Traktionsscheibe (12₁, 12₂) mit einer Geschwindigkeitssteuerung versehen ist, die dazu ausgelegt ist, mindestens in dem aktiven Zustand des Motorantriebs (27), die Fahrgeschwindigkeit des mindestens einen Seils (7, 8) an der Position des selbsthebenden Krans (1) relativ zu der Fahrgeschwindigkeit des mindestens einen Seils (7, 8) an der Position der am Boden (10) angeordneten Seilwinde (9) zu begrenzen.

10. Selbsthebender Kran nach einem der Ansprüche 3 bis 7, wobei die Seilraupe (11) ein Motorgehäuse (28) beinhaltet, das mit einem Motorantrieb (27) und der mindestens einen motorangetriebenen Traktionsscheibe (12₁, 12₂) versehen ist, und wobei das Motorgehäuse (28) um einen Rotationspunkt (29) in Bezug auf einem Rahmen (30), der die erste und die zweite Stützscheibe (15₁, 15₂, 16₁, 16₂) trägt, zwischen einer aktiven Position, in der die Seilraupe (11) in ihrem aktiven Zustand (13) ist, und einer passiven Position, in der die Seilraupe (11) in ihrem passiven Zustand (14) ist, schwenkt.

11. Selbsthebender Kran nach Anspruch 10, wobei ein Federpaket (31) zwischen dem Motorgehäuse (28) und dem Rahmen (30) angeordnet ist, sodass, in der aktiven Position des Motorgehäuses (28), das Federpaket (31) mit einem ersten Momentarm (M₁) in Bezug auf den Rotationspunkt (29) des Motorgehäuses auf das Gehäuse wirkt, und, in der passiven Position des Motorgehäuses (28), das Federpaket (31) mit einem zweiten Momentarm (M₂) in Bezug auf den Rotationspunkt (29) des Motorgehäuses (28) auf das Motorgehäuse wirkt, und wobei der erste Momentarm (M₁) größer ist als der zweite Momentarm (M₂).

12. Selbsthebender Kran nach einem der vorhergehenden Ansprüche, wobei die Seilraupe (11) in dem selbsthebenden Kran (1), bevorzugt in dem Auslegerarm (5) und bevorzugt an einem Ende des Auslegerarms nahe zum Sockel (4) angeordnet ist.

13. Verfahren zum Montieren und anschließendem Betreiben eines selbsthebenden Krans (1) auf einer Gondel (2) oder auf einem Turm (46) einer Windturbine (3), wobei der selbsthebende Kran einen Sockel (4), einen Auslegerarm (5), eine Hakenflasche (6), eine am Boden (10) angeordnete Seilwinde (9) und mindestens ein Seil (7, 8) beinhaltet, das dazu ausgelegt ist, die Hakenflasche (6) in Bezug auf den Auslegerarm (5) zum Betrieb des selbsthebenden Krans (1) in seiner auf der Gondel (2) oder auf dem Turm (46) montierten Position anzuheben oder abzusenken, wobei sich das mindestens eine Seil (7, 8) von der Hakenflasche (6) nach außen durch den Sockel (4), von der Gondel (2) oder von dem Turm (46) und zu einer am Boden (10) angeordneten Seilwinde (9) erstreckt, wobei der selbsthebende Kran (1) vom Boden (10) zu der Gondel (2) oder zu dem Turm (46) durch Betreiben der am Boden (10) angeordneten Seilwinde (9) gehoben wird, und wobei der selbsthebende Kran (1) in seiner auf der Gondel (2) oder auf dem Turm (46) montierten Position durch Betreiben der am Boden (10) angeordneten Seilwinde (9) betrieben wird**, gekennzeichnet dadurch, dass** der selbsthebende Kran (1) mit einer Seilraupe (11) versehen ist, die mindestens eine motorangetriebene Traktionsscheibe (12₁, 12₂) aufweist, die dazu ausgelegt ist, eine Zugkraft (Fₚ) durch Reibung auf das mindestens eine Seil (7, 8) zu übertragen, dadurch dass, die Seilraupe (11) zwischen einem aktiven Zustand (13), in dem die Traktionsscheibe (12₁, 12₂) eine Zugkraft oder mindestens eine wesentliche Zugkraft auf das mindestens eine Seil (7, 8) überträgt, und einem passiven Zustand (14), in dem die Traktionsscheibe (12₁, 12₂) keine oder mindestens im Wesentlichen keine Zugkraft auf das mindestens eine Seil (7, 8) überträgt, versetzbar ist, dadurch, dass, wenn der selbsthebende Kran (1) in seiner auf der Gondel (2) oder auf dem Turm (46) montierten Position ohne eine oder mindestens im Wesentlichen ohne eine an der Hakenflasche (6) befestigte externe Last betrieben wird, die Seilraupe (11) in ihrem aktiven Zustand (13) betrieben wird, und dadurch, dass, wenn der selbsthebende Kran (1) in seiner auf der Gondel (2) oder auf dem Turm (46) montierten Position mit einer an der Hakenflasche (6) befestigten wesentlichen externen Last betrieben wird, die Seilraupe (11) in ihrem passiven Zustand (14) betrieben wird.

## Revendications

1. Grue auto-élévatrice (1) adaptée pour être montée sur une nacelle (2) ou sur une tour (46) d'une turbine éolienne (3), dans laquelle la grue auto-élévatrice inclut un socle (4), un bras de flèche (5), une moufle à crochet (6), un treuil à câble (9) agencé au sol (10) et au moins un câble (7, 8) adapté pour soulever ou abaisser la moufle à crochet (6) par rapport au bras de flèche (5) pour le fonctionnement de la grue auto-élévatrice dans sa position montée sur la nacelle (2) ou sur la tour (46), dans laquelle l'au moins un câble (7, 8) est adapté pour s'étendre à partir de la moufle à crochet (6), à travers le socle (4), à partir de la nacelle (2) ou à partir de la tour (46) et vers ledit treuil à câble (9) agencé au sol (10), dans laquelle la grue auto-élévatrice (1) est adaptée pour être élevée du sol (10) à la nacelle (2) ou à la tour (46) par le fonctionnement du treuil à câble (9) agencé au sol, et dans laquelle la grue auto-élévatrice (1) est adaptée pour fonctionner dans sa position montée sur la nacelle (2) ou sur la tour (46) par le fonctionnement du treuil à câble (9) agencé au sol (10), **caractérisée en ce que** la grue auto-élévatrice (1) est fournie avec une chenille de câble (11) présentant au moins une poulie de traction entraînée par un moteur (12₁, 12₂) adaptée pour, pendant le fonctionnement de la grue auto-élévatrice (1) dans sa position montée sur la nacelle (2) ou sur la tour (46), transférer une force de tirage (F_{P}) à l'au moins un câble (7, 8) par friction, et **en ce que** la chenille de câble (11) peut être basculée entre un état actif (13) dans lequel la poulie de traction (12₁, 12₂) peut transférer une force de tirage ou peut transférer une force de tirage au moins substantielle à l'au moins un câble (7, 8) et un état passif (14) dans lequel la poulie de traction (12₁, 12₂) peut ne transférer aucune force de tirage ou au moins substantiellement aucune force de tirage à l'au moins un câble (7, 8).

2. Grue auto-élévatrice selon la revendication 1, dans laquelle, dans l'état actif (13) de la chenille de câble (11), un premier angle d'enroulement (W₁) représente l'angle de contact entre l'au moins un câble (7, 8) et la poulie de traction (12₁, 12₂), et dans laquelle, dans l'état passif (14) de la chenille de câble (11), un deuxième angle d'enroulement (W₂) représente l'angle de contact entre l'au moins un câble (7, 8) et la poulie de traction (12₁, 12₂), et en ce que le premier angle d'enroulement (W₁) est au moins substantiellement supérieur au deuxième angle d'enroulement (W₂).

3. Grue auto-élévatrice selon la revendication 1 ou 2, dans laquelle l'au moins un câble (7, 8), de manière successive, entre en contact avec une première poulie de support (15₁, 15₂), avec la poulie de traction entraînée par un moteur (12₁, 12₂) et avec une deuxième poulie de support (16₁, 16₂), en ce que, lorsqu'elle est observée dans une direction transversale (T) de l'au moins un câble (7, 8), la poulie de traction entraînée par un moteur (12₁, 12₂) roule sur un premier côté de traction (17) de l'au moins un câble (7, 8) et les première et deuxième poulies de support (15₁, 15₂, 16₁, 16₂) roulent sur un deuxième côté (18) de l'au moins un câble (7, 8), et en ce que la poulie de traction entraînée par un moteur (12₁, 12₂) est relativement mobile par rapport à au moins l'une des première et deuxième poulies de support (15₁, 15₂, 16₁, 16₂) dans la direction transversale (T) de l'au moins un câble (7, 8) entre une position active (19), dans laquelle la chenille de câble (11) est dans son état actif (13), et une position passive (20), dans laquelle la chenille de câble (11) est dans son état passif (14).

4. Grue auto-élévatrice selon la revendication 3, dans laquelle la poulie de traction entraînée par un moteur (12₁, 12₂) est sollicitée par ressort par rapport à l'au moins une des première et deuxième poulies de support (15₁, 15₂, 16₁, 16₂) de la position passive (20) de la poulie de traction (12₁, 12₂) à la position active (19) de la poulie de traction (12₁, 12₂).

5. Grue auto-élévatrice selon la revendication 3 ou 4, dans laquelle, dans la position active (19) de la poulie de traction entraînée par un moteur (12₁, 12₂), la poulie de traction presse l'au moins un câble (7, 8) contre au moins une roue de pression (22₁, 22₂).

6. Grue auto-élévatrice selon la revendication 5, dans laquelle la poulie de traction entraînée par un moteur (12₁, 12₂) présente un diamètre d'au moins 3 fois, de préférence au moins 4 fois, le diamètre de l'au moins une roue de pression (22₁, 22₂).

7. Grue auto-élévatrice selon la revendication 5 ou 6, dans laquelle, dans la position active (19) de la poulie de traction entraînée par un moteur (12₁, 12₂), la poulie de traction (12₁, 12₂) est guidée pour être relativement déplaçable par rapport à l'au moins une roue de pression (22₁, 22₂) dans une direction (D) formant un angle (a) compris entre 30 et 85 degrés, de préférence entre 45 et 75 degrés, avec un axe (A) à travers un axe de rotation (23) de la poulie de traction et un axe de rotation (24) de l'au moins une roue de pression (22₁, 22₂).

8. Grue auto-élévatrice selon l'une quelconque des revendications précédentes, dans laquelle un entraînement moteur (27) pour l'au moins une poulie de traction entraînée par un moteur (12₁, 12₂) est commutable entre un mode actif dans lequel un moment de rotation au moins substantiel peut être appliqué à la poulie de traction (12₁, 12₂) et un mode roue libre dans lequel aucun moment de rotation ou au moins aucun moment de rotation significatif ne peut être appliqué à la poulie de traction (12₁, 12₂), et dans laquelle la chenille de câble (11) est adaptée pour commuter l'entraînement moteur (27) vers son mode roue libre lorsque la chenille de câble (11) est basculée de son état actif (13) à son état passif (14).

9. Grue auto-élévatrice selon la revendication 8, dans laquelle un entraînement moteur (27) pour l'au moins une poulie de traction entraînée par un moteur (12₁, 12₂) est fourni avec une commande de vitesse adaptée, au moins dans le mode actif de l'entraînement moteur (27), pour limiter la vitesse de défilement de l'au moins un câble (7, 8) au niveau de la position de la grue auto-élévatrice (1) par rapport à la vitesse de défilement de l'au moins un câble (7, 8) au niveau de la position du treuil à câble (9) agencé au sol (10).

10. Grue auto-élévatrice selon l'une quelconque des revendications 3 à 7, dans laquelle la chenille de câble (11) inclut un boîtier de moteur (28) fourni avec un entraînement moteur (27) et l'au moins une poulie de traction entraînée par un moteur (12₁, 12₂), et dans laquelle le boîtier de moteur (28) peut pivoter autour d'un point de rotation (29) par rapport à un cadre (30) portant les première et deuxième poulies de support (15₁, 15₂, 16₁, 16₂) entre une position active dans laquelle la chenille de câble (11) est dans son état actif (13) et une position passive dans laquelle la chenille de câble (11) est dans son état passif (14).

11. Grue auto-élévatrice selon la revendication 10, dans laquelle un bloc de ressorts (31) est agencé entre le boîtier de moteur (28) et le cadre (30) de sorte que, dans la position active du boîtier de moteur (28), le bloc de ressorts (31) agisse sur le boîtier de moteur avec un premier bras de moment (M₁) par rapport au point de rotation (29) du boîtier de moteur, et, dans la position passive du boîtier de moteur (28), le bloc de ressorts (31) agisse sur le boîtier de moteur avec un deuxième bras de moment (M₂) par rapport au point de rotation (29) du boîtier de moteur (28), et dans laquelle le premier bras de moment (M₁) est supérieur au deuxième bras de moment (M₂).

12. Grue auto-élévatrice selon l'une quelconque des revendications précédentes, dans laquelle la chenille de câble (11) est agencée dans la grue auto-élévatrice (1), de préférence dans le bras de flèche (5), et de préférence au niveau d'une extrémité du bras de flèche à côté du socle (4).

13. Procédé de montage et ultérieurement de fonctionnement d'une grue auto-élévatrice (1) sur une nacelle (2) ou sur une tour (46) d'une turbine éolienne (3), dans lequel la grue auto-élévatrice inclut un socle (4), un bras de flèche (5), une moufle à crochet (6), un treuil à câble (9) agencé au sol (10) et au moins un câble (7, 8) adapté pour soulever ou abaisser la moufle à crochet (6) par rapport au bras de flèche (5) pour le fonctionnement de la grue auto-élévatrice (1) dans sa position montée sur la nacelle (2) ou sur la tour (46), dans lequel l'au moins un câble (7, 8) s'étend à partir de la moufle à crochet (6), à travers le socle (4), à partir de la nacelle (2) ou à partir de la tour (46) et vers un treuil à câble (9) agencé au sol (10), dans lequel la grue auto-élévatrice (1) est élevée du sol (10) à la nacelle (2) ou à la tour (46) par le fonctionnement du treuil à câble (9) agencé au sol (10), et dans lequel la grue auto-élévatrice (1) fonctionne dans sa position montée sur la nacelle (2) ou sur la tour (46) par le fonctionnement du treuil à câble (9) agencé au sol (10), **caractérisée en ce que** la grue auto-élévatrice (1) est fournie avec une chenille de câble (11) présentant au moins une poulie de traction entraînée par un moteur (12₁, 12₂) adaptée pour transférer une force de tirage (F_{P}) à l'au moins un câble (7, 8) par friction, **en ce que** la chenille de câble (11) peut être basculée entre un état actif (13) dans lequel la poulie de traction (12₁, 12₂) transfère une force de tirage ou une force de tirage au moins substantielle à l'au moins un câble (7, 8) et un état passif (14) dans lequel la poulie de traction (12₁, 12₂) ne transfère aucune ou au moins substantiellement aucune force de tirage à l'au moins un câble (7, 8), **en ce que**, lorsque la grue auto-élévatrice (1) fonctionne dans sa position montée sur la nacelle (2) ou sur la tour (46) sans aucune charge ou au moins substantiellement sans aucune charge extérieure attachée à la moufle à crochet (6), la chenille de câble (11) fonctionne dans son état actif (13), et **en ce que**, lorsque la grue auto-élévatrice (1) fonctionne dans sa position montée sur la nacelle (2) ou sur la tour (46) avec au moins une charge extérieure substantielle attachée à la moufle à crochet (6), la chenille de câble (11) fonctionne dans son état passif (14).
